# EUROPEAN PATENT SPECIFICATION

(11) **EP 4 479 279 B1**
(45) Date of publication and mention of the grant of the patent: **02.12.2026**
(21) Application number: 23755613.9
(22) Date of filing: 17.02.2023
(51) Int. Cl.: B60S 3/06

(54) **APPARATUS FOR CLEARING ICE FROM A VEHICLE ROOF AND CORRESPONDING METHOD**
VORRICHTUNG ZUM ENTFERNEN VON EIS VON EINEM FAHRZEUGDACH UND VERFAHREN HIERZU
APPAREIL POUR ÉLIMINER LA GLACE D'UN TOIT DE VÉHICULE ET PROCÉDÉ CORRESPONDANT

(30) Priority: 18.02.2022 US 202263268219 P
(43) Date of publication of application: 25.12.2024
(73) Proprietor: Produits Hevea Inc., Québec J0B 2H0 (CA)
(72) Inventor: DESLAURIERS, Jean, Québec J0B 2H0 (CA); LUSSIER, Andre, Québec J0B 2H0 (CA); BLANCHETTE, Philip David, Québec J0B 2H0 (CA); BERGERON, Gabriel, Québec J0B 2H0 (CA)
(74) Representative: Zacco Sweden AB
(86) International application number: PCT/CA2023/050212
(87) International publication number: WO 2023/155017

(56) References cited:
- DE-A1- 102010 012 817
- DE-A1- 102010 012 817
- US-A1- 2008 178 411
- US-B2- 10 351 108
- US-B2- 11 084 466
- US-B2- 8 857 451
- US-B2- 9 834 181

## Description

### PRIOR APPLICATION

The present application claims priority from U.S. provisional patent application No. 63/268,219, filed on February 18, 2022, and entitled "APPARATUS FOR CLEARING ICE FROM A VEHICLE ROOF AND CORRESPONDING METHOD".

### TECHNICAL FIELD

The technical field relates to vehicle ice clearing devices and more specifically to an apparatus for clearing ice from a top surface of a vehicle such as a tractor trailer, and to a corresponding method.

### BACKGROUND

The accumulation of snow and ice on the roofs and other surfaces of vehicles poses a serious hazard for drivers on the road. Blowing snow from the roofs of these vehicles can severely reduce visibility thereby increasing the risks of accidents. This problem is of particular concern for the drivers and/or owners/operators of commercial vehicles such as tractor trailers, as the trailer portion of these vehicles tends to present a large surface area upon which ice and/or snow may accumulate. Moreover, some jurisdictions might impose a legal obligation to clear ice and/or snow from the vehicle roofs. In some cases, to comply with this legal requirement, drivers or employees climb atop the vehicle roofs and manually clear them of snow and ice. The task can be physically demanding, time-consuming, and can present a significant safety hazard to the driver/employee as the vehicle roof is often slippery.

DE 10 2010 012 817 A1 discloses a device for removing precipitation from truck roofs. The device comprises a frame that spans the width of the vehicle and rests on the roof via an axle with wheels. A cable system is utilized to pull the device along the length of the vehicle roof from the rear to the front. The device includes runners arranged at an angle to push snow or ice laterally off the roof. Furthermore, the movement of the device drives a rotating shaft which may be equipped with a brush for loosening snow or flails for breaking ice.

US 2008/0178411 A1 discloses an apparatus for clearing snow from the roof of a commercial vehicle, such as a tractor-trailer. The apparatus comprises a lifting frame with upright members and a carriage assembly that moves vertically along said upright members to position a snow clearing assembly onto the vehicle roof. The clearing assembly includes a housing containing a blower and a pair of transverse auger members mounted in tandem. The front auger is spaced apart from the roof surface to break up snow, while the rear auger is designed to remove remaining snow and ice. The augers direct the snow toward the blower for ejection.

US 8,857,451 B2 discloses a device for removing snow and debris from large vehicles using airflow. The device comprises a support structure, such as a gantry or towers, which holds at least one blower positioned to blow snow or debris off the top of a vehicle passing underneath. The support height may be adjustable. In addition to the blowers, the apparatus may include a separate scraping assembly, such as a planar blade, and a chemical de-icing system.

In view of the above, there is a need for an ice-clearing apparatus which would be able to overcome or at least minimize some of the above-discussed prior art concerns.

### SUMMARY

It is therefore an aim of the present invention to at least partially address the above-mentioned issues.

According to a general aspect, there is provided a material-clearing apparatus for clearing a material from a substantially planar item defining an item length, the material-clearing apparatus being displaceable along the item length in a displacement direction, the material-clearing apparatus comprising: a frame arrangeable above the item; and a tapping assembly at least partially made of a resilient material and rotatably mounted to the frame about a first rotation axis substantially transversal to the item length when in use to at least partially separate the material from the item upon tapping of the tapping assembly onto an upper surface of the item.

More particularly, there is provided an ice-clearing apparatus for clearing ice from a vehicle roof defining a roof length, the ice-clearing apparatus being displaceable along the roof length in a displacement direction. The ice-clearing apparatus comprises a frame arrangeable above the vehicle roof; and an ice-tapping assembly at least partially made of a resilient material and rotatably mounted to the frame about a first rotation axis substantially transversal to the roof length when in use to contact the ice with the resilient material and to exert a downward pressure onto the ice from the vehicle roof thereby at least partially separate the ice from the vehicle roof upon tapping of the ice-tapping assembly onto the vehicle roof.

In some implementations, the ice-removing assembly can be mounted to the frame and arranged, considered along the displacement direction, rearwardly of the ice-tapping assembly, the ice-removing assembly being configured to displace the separated ice away from the vehicle roof.

In some implementations, the ice-tapping assembly can include a shaft rotatably mounted to the frame about the first rotation axis and at least one ice-tapping member mounted to the shaft and extending radially therefrom, with the ice-tapping member being at least partially made of the resilient material. For example, the at least one ice-tapping member can define a central shaft-receiving cavity, the shaft being inserted in the central shaft-receiving cavity to trigger rotation of the at least one ice-tapping member when rotated.

In one embodiment, the at least one ice-tapping member can include a shaft-mounting hub defining the shaft-receiving cavity, and at least one ice-tapping component extending outwardly at an angle from the shaft-mounting hub, the at least one ice-tapping component being in contact with the ice at a distal end portion thereof when the ice-tapping assembly is in use. For example, the at least one ice-tapping component can include multiple ice-tapping components that are regularly angularly spaced apart from each other and made integral with the shaft-mounting hub. For example, each one of the multiple ice-tapping components can be an ice-tapping arm extending radially from the shaft-mounting hub. For example, the ice-tapping member can include at least six ice-tapping arms. Optionally, the at least one ice-tapping member can include multiple ice-tapping members being adjacently mounted to the shaft along the first rotation axis when inserted in corresponding shaft-receiving cavity of each ice-tapping member. For example, the plurality of ice-tapping members can be installed in alignment with respect to one another along the first rotation axis.

In another embodiment, the at least one ice-tapping component can include multiple ice-tapping components that are positioned at an angle with respect to one another and fastened to the shaft-mounting hub. For example, each one of the multiple ice-tapping components can be an ice-tapping plate having a length extending along the shaft-mounting hub and a width extending transversally to the first rotation axis. For example, the ice-tapping member can comprise at least four ice-tapping plates. Optionally, the at least one ice-tapping member can be a single ice-tapping member being mounted to the shaft when inserted in the shaft-receiving cavity of the ice-tapping member.

In some implementations, the ice-removing assembly can comprise a plurality of ice-removing members translatable along a removing direction substantially perpendicular to the displacement direction when in use. For example, at least one of the plurality of ice-removing members can be at least partially made of a resilient material.

In some implementations, the ice-clearing apparatus can further comprise an ice deflector surrounding at least partially the ice-tapping assembly and configured to direct the separated ice toward the ice-removing assembly.

In some implementations, the ice-clearing apparatus can further comprise an ice-collecting plate rearward of the ice-removing assembly, the ice-collecting plate comprising a roof-contacting surface.

According to another general aspect, there is provided an ice-clearing system comprising: an ice-clearing apparatus according to the present disclosure; and a support structure, the ice-clearing apparatus being operatively connected to the support structure so as to position the ice-clearing apparatus at a height above ground level and ensure contact of at least a portion of the ice-tapping assembly with the ice of the vehicle roof when in use. For example, the support structure can comprise two vertical support assemblies separated by a distance sufficient to move a vehicle therebetween. Optionally, the system can further comprise an apparatus-lifting assembly to configure the ice-clearing apparatus in at least two vertical positions.

According to another general aspect, there is provided a material-clearing apparatus for clearing a material from a substantially planar item defining an item length, the material-clearing apparatus being displaceable along the item length in a displacement direction. The material-clearing apparatus comprises a frame arrangeable above the item; and a tapping assembly at least partially made of a resilient material and rotatably mounted to the frame about a first rotation axis substantially transversal to the item length when in use to at least partially separate the material from the item upon tapping of the tapping assembly onto an upper surface of the item. In some implementations, the material-clearing apparatus can further comprise at least one additional feature as defined herein.

According to another general aspect, there is provided a method for clearing ice from a roof of a vehicle, the method comprising: arranging the vehicle in a vehicle-receiving space at least partially delimited by a support structure; positioning an ice-clearing apparatus mounted to the support structure close to an upper surface of the vehicle roof; and actuating an ice-tapping assembly of the ice-clearing apparatus to exert a downward pressure onto the ice on the vehicle roof via tapping and to separate the ice from the vehicle roof upon tapping of the ice-tapping assembly onto the vehicle roof, the ice-tapping assembly being at least partially made of a resilient material extending substantially transversally to a roof length. For example, the actuating of the ice-tapping assembly can comprise rotating the ice-tapping assembly of the ice-clearing apparatus about a first rotation axis substantially transversal to the roof length. For example, the method can further comprise actuating an ice-removing assembly mounted of the ice-clearing apparatus, the ice-removing assembly displacing the separated ice away from the vehicle roof.

### BRIEF DESCRIPTION OF THE DRAWINGS

Fig. 1 is a top elevational view of an ice-clearing apparatus in accordance with a first embodiment, the ice-clearing apparatus comprising a frame, and an ice-tapping assembly and an ice-removing assembly both mounted to the frame;
Fig 2 is top view of the ice-clearing apparatus of Fig. 1;
Fig. 3 is a side- view of the ice-clearing apparatus of Fig. 1;
Fig. 4 is a front elevational view of the ice-clearing apparatus of Fig. 1;
Fig. 5 is a front perspective view of the ice-clearing apparatus of Fig. 1;
Fig. 6 is a top perspective view of an ice-tapping member of the ice-tapping assembly of Fig. 1;
Fig. 7 is front perspective view of an ice-removing member of the ice-removing assembly of Fig. 1;
Fig 8 is a side perspective view of the ice-clearing apparatus of Fig. 1 mounted to a support structure in accordance with a first embodiment;
Fig. 9 is a top perspective view of a support structure in accordance with a second embodiment;
Fig. 10 is a partial side perspective view of an ice-tapping assembly in accordance with a second embodiment of the apparatus; and
Fig. 11 is a partial side perspective view of an ice-tapping member of the ice-tapping assembly of Fig. 10.

### DETAILED DESCRIPTION

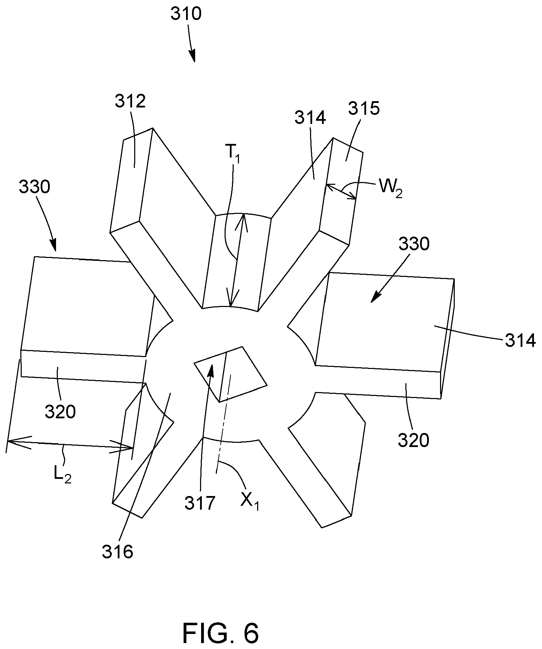

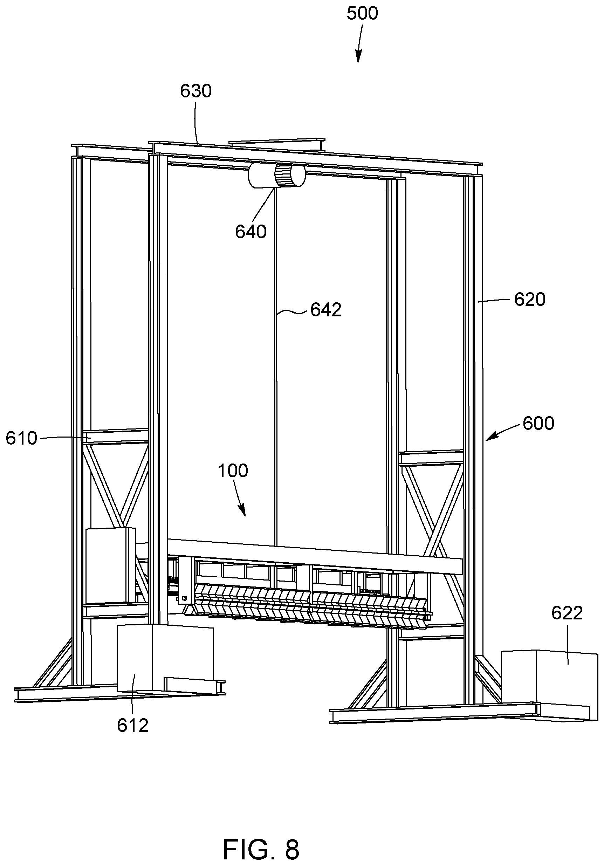

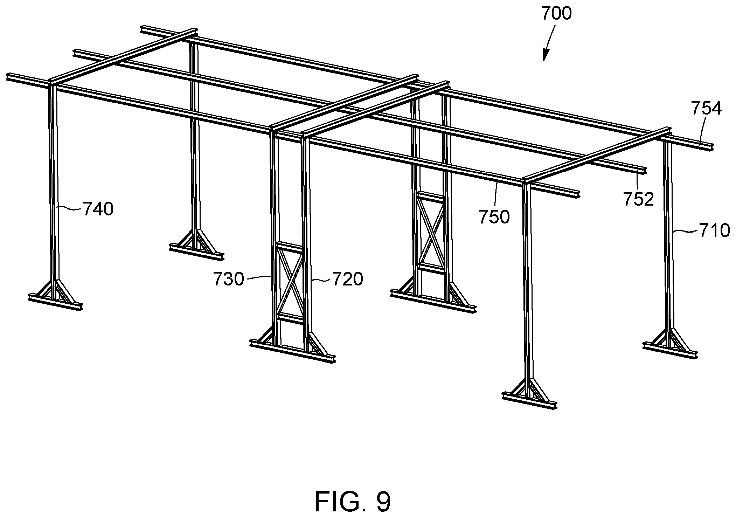

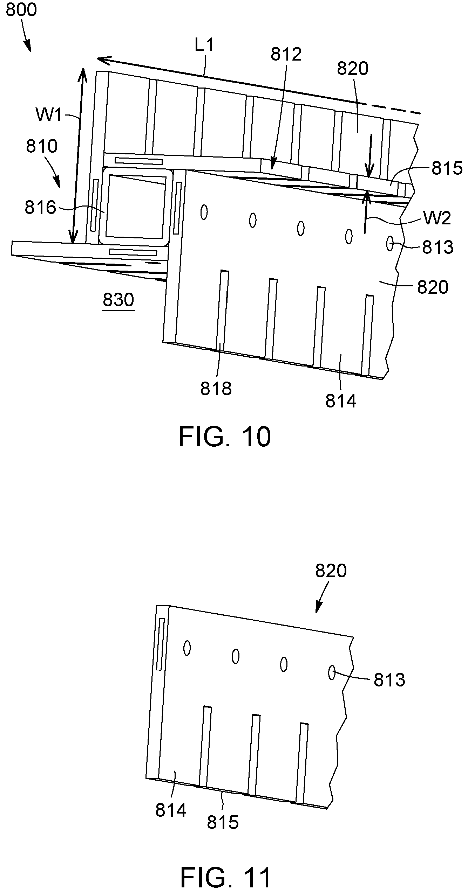

In one aspect, there is provided an ice-clearing apparatus for clearing ice from a vehicle roof and comprising a tapping assembly that is configured to contact the ice and exert a downward pressure thereon without damaging the vehicle roof. For example, Fig. 6 shows a first embodiment (310) of a tapping member of the tapping assembly and Fig. 11 shows another embodiment (810) of a tapping member of the tapping assembly. There is further provided a system including the ice-clearing apparatus as described herein and a support structure extending upwardly from the ground level at a height allowing passage of a vehicle under the support structure. For example, Fig. 8 shows an embodiment (600) of the support structure forming an archway, and Fig. 9 illustrates another embodiment (700) of the support structure having a larger footprint and forming an elongated pathway that is adapted to a length of the vehicle roof. Within the system, the ice-clearing apparatus is operatively connected to the support structure such that the ice-clearing apparatus is hanging from the support structure and is positioned above the vehicle roof to contact, via the tapping assembly, the ice that is accumulated onto the vehicle roof.

Relative translation of the ice-clearing apparatus with respect to the vehicle roof can be fulfilled in several ways. For example, the vehicle can be gradually driven forwardly through the support structure to ensure contact of the ice-clearing apparatus from a front end to a rear end of the vehicle roof. In another example, the vehicle can remain still under the support structure and the ice-clearing apparatus can be moved along the support structure to ensure contact of the ice-clearing apparatus from the front end to the rear end of the vehicle roof. To that effect, there is further provided a method for clearing ice from the vehicle roof including actuating the tapping assembly which extends transversally to the length of the vehicle roof (so as to span over an entire width of the vehicle roof). Further details and definitions regarding the ice-clearing apparatus, related system and method are provided below and in the appended drawings and claims.

It should be readily understood that the term "ice" refers herein to any solid forms of water. Ice thus herein encompasses frost, snow, rime, graupel, etc. It should further be noted that, although the clearing apparatus as described herein is firstly developed for ice removal, any conveyable material accumulating onto a vehicle roof can be removed from the vehicle via the clearing apparatus. In some instance, the clearing apparatus could be used to remove dirt accumulating onto the vehicle roof. Thus, the ice-clearing apparatus can be referred to as a material-clearing apparatus or a clearing apparatus.

It should further be understood that, although the clearing apparatus, related system and method are mainly described herein with relation to clearing a vehicle roof, the clearing apparatus can be actuated to successfully clear any other substantially planar surface of an item. For example, the support structure of the system can be held above a top surface of a container or a planar roof of a building such that the clearing apparatus can be actuated to clear any material accumulating thereon.

Consequently, in the following description, the different components will usually refer to ice, but it should be understood that the present disclosure is not limited to an apparatus configured to remove ice from a vehicle roof. The apparatus can be easily adapted to remove any type of material, such as ice, dirt, sand, ashes and the like or any combinations thereof from a vehicle roof or any other type of substantially planar surface with a material thereon needed to be cleared therefrom.

### Clearing apparatus

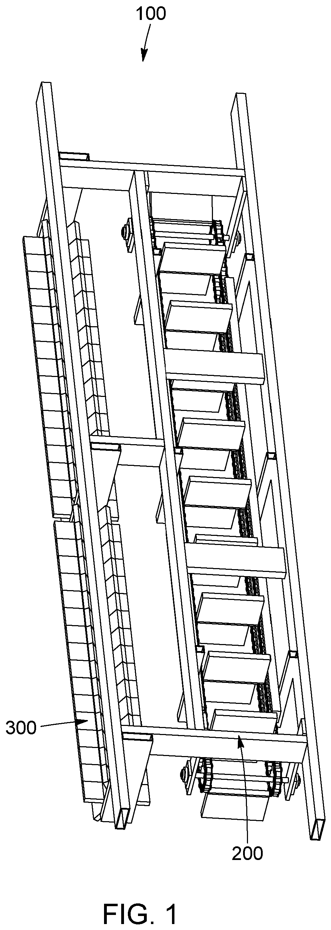

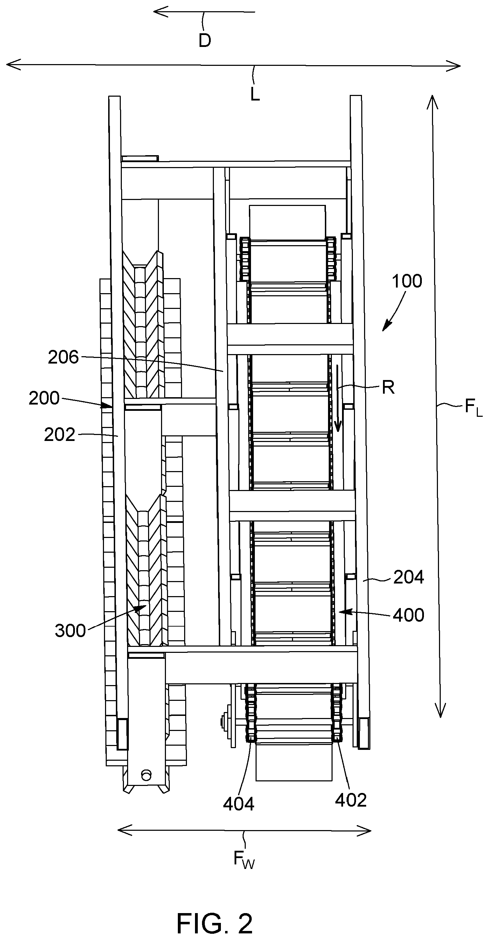

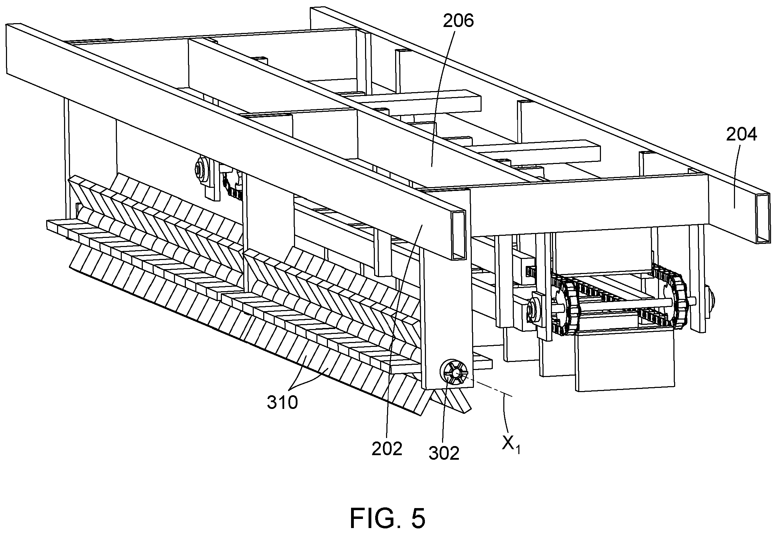

Referring now to the drawings, and more particularly to Figs. 1 to 5, there is shown a clearing apparatus (an ice-clearing apparatus 100 in the embodiment shown) for clearing a material (for instance ice) from a substantially planar item (e.g., a vehicle roof - not represented - in the embodiment shown) defining an item length (a roof length L in the embodiment shown), the ice-clearing apparatus 100 being displaceable along the roof length L in a displacement direction D. As detailed below, it should be understood that it is only required that the vehicle be slowly driven under the ice-clearing apparatus 100 in the displacement direction D. Since all that is needed is relative motion/translation between the ice-clearing apparatus 100 and the vehicle roof, it is immaterial that the vehicle is in motion rather than the ice-clearing apparatus 100, so ice will be pushed off the roof and over the sides of the vehicle.

As detailed below, the ice-clearing apparatus 100 comprises a frame 200 arrangeable above the vehicle roof, a tapping assembly (an ice-tapping assembly 300 in the embodiment shown) being at least partially made of a resilient material and being rotatably mounted to the frame 200 about a first rotation axis X1 substantially transversal to the roof length L when in use. The tapping assembly is positioned to contact the material, for example ice, that has at least partially adhered to the vehicle roof and the tapping assembly is further actuated to exert a downward pressure onto the ice via tapping, thereby at least partially separating the ice from the vehicle roof upon tapping of the tapping assembly onto the vehicle roof.

In the present disclosure, the term resilient should be understood as referring to a material having properties allowing the corresponding component of the ice-clearing apparatus to flex when borne against the vehicle roof during actuation of the ice-clearing apparatus without damaging the vehicle roof. For instance, the resilient material is at least partially made of natural rubber, synthetic rubber, elastomer or any other material having suitable resilient properties.

The ice-clearing apparatus 100 further comprises a removing assembly (an ice-removing assembly 400 in the embodiment shown) mounted to the frame 200 and arranged, considered along the displacement direction D, rearwardly of the ice-tapping assembly 200, the removing assembly being configured to displace and convey the separated ice away from the vehicle roof (for instance to push the separated ice off the sides of the vehicle). Thus, the tapping assembly is configured to render the material conveyable by the removing assembly, and the removing assembly is positioned with respect to the tapping assembly in a way to collect and convey the material which has been rendered conveyable by the tapping assembly, when actuated.

In the embodiment shown, the frame 200 has a substantially rectangular shape and can comprise a plurality of plates and/or tubes, for instance made of steel, connected to each other (for instance welded to each other). For instance, referring to Fig. 1, the frame 200 comprises two substantially parallel peripheral longitudinal beams 202, 204 (or forward and rearward longitudinal beams 202, 204, considered with respect to the displacement direction D of the ice-clearing apparatus 100) forming at least partially a perimeter of the frame, and an inner longitudinal beam 206 extending between the two peripheral longitudinal beams 202, 204.

The frame 200 has a frame length FL extending transversally (for instance substantially perpendicular) to the roof length L when in use. For instance, the frame length FL is comprised between about 10 feet and about 20 feet. In another embodiment, the frame length FL is comprised between about 12 feet and about 18 feet. In another embodiment, the frame length FL is about 15 feet.

The frame 200 also has a frame width FW extending substantially parallel to the roof length L when in use. For instance, the frame width FW is comprised between about 2 feet and about 6 feet. In another embodiment, the frame width FW is comprised between about 3 feet and about 5 feet. In another embodiment, the frame width FW is about 4 feet.

It is appreciated that the shape, the configuration, the components of the frame and the arrangement of the components thereof can vary from the embodiment shown.

The clearing apparatus is arrangeable on or over, in the vicinity of, the vehicle roof and might be, as detailed further below, carried by an apparatus-lifting assembly. One can readily understand that the clearing apparatus is positioned at a height above ground level to have at least a portion of the tapping assembly in contact with the material, for example ice, that is accumulated onto the vehicle roof.

### Tapping assembly

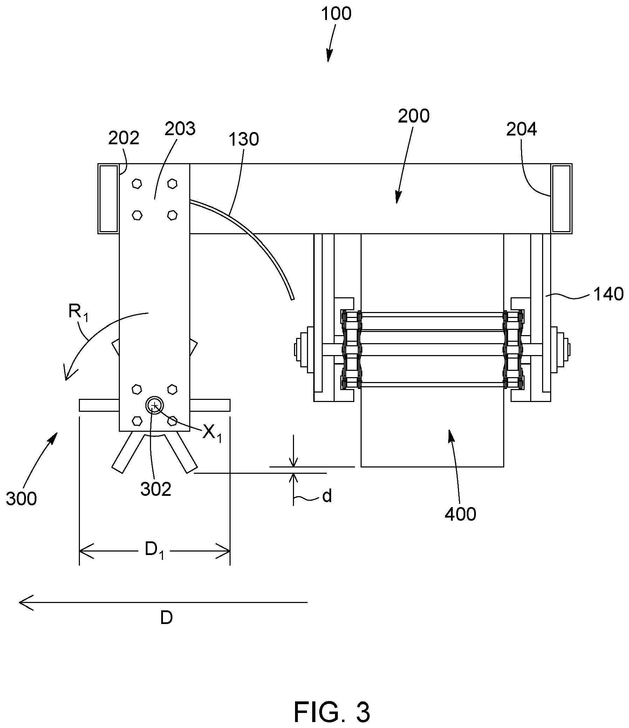

In the embodiment shown in Figs. 1 to 6, and more particularly referring to Fig. 3, the ice-tapping assembly 300 comprises a shaft 302 rotatably mounted to the frame 200 (for instance close to the forward longitudinal beam 202 thereof, for instance to a forward vertical beam 203 mounted rearward of the forward longitudinal beam 202) about the first rotation axis X1. In the embodiment shown, the first rotation axis X1 is substantially parallel to the forward longitudinal beam 202 (i.e., substantially parallel to the frame length FL, i.e., substantially perpendicular to the displacement direction D and/or the vehicle roof length L and/or the frame width FW).

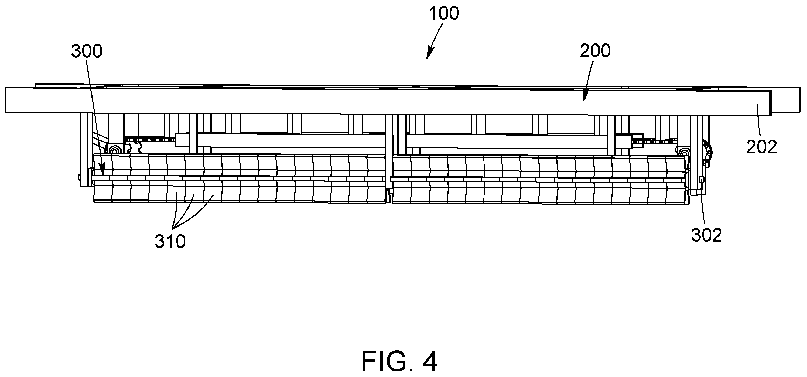

Referring to Fig. 4, the ice-tapping assembly 300 also comprises a plurality of ice-tapping members 310 mounted to the shaft 302 and extending radially therefrom. The ice-tapping members 310 are secured to the shaft 302 such that rotation of the shaft 302 triggers simultaneous rotation of each ice-tapping member about the first rotation axis X1. A length of the ice-tapping assembly 300 (considered along the first rotation axis X1) is substantially equal or slightly smaller than the frame length FL. In the embodiment shown in Figs. 1 to 6, the ice-tapping assembly length is comprised between about 9 feet and about 15 feet, for instance comprised between 11 feet and about 13 feet, for instance about 12 feet. In the embodiment show, a few dozens of ice-tapping members are fixedly mounted to the shaft 302 and are rotated about the first rotation axis X1 therewith upon actuation of the shaft.

It could also be conceived an ice-tapping assembly 300 having more or less ice-tapping members mounted to the shaft 302, or including a single elongated ice-tapping member being made as a one-piece structure and defining a central shaft-receiving channel for insertion and securing of the shaft 302 therein. It could also be conceived that one or more ice-tapping members can at least partially be made integral with the shaft 302.

In the embodiment shown in Figs. 10 and 11, the ice-tapping assembly 800 can include a plurality of elongated ice-tapping members 810 (for instance four, in the shown embodiment), each being made as a one-piece structure that is mounted to the shaft 802. The ice-tapping members 810 are sized and shaped to form a mill-like structure when secured to the shaft (not represented in Figures 10 and 11).

It could also be conceived that one or more ice-tapping members 310/810 can at least partially be made integral with the shaft.

In the present disclosure, the shaft is substantially linear but it could also be conceived a shaft that would have a varying profile along the length thereof (i.e., along a direction substantially parallel to the first rotation axis) to contribute to the tapping effect that will be disclosed below.

In the embodiment shown in Figs. 1 to 6, and more particularly referring to Fig. 1, the ice-tapping assembly 300 has an outer cross-section D1 comprised between about 6 inches and about 24 inches, for instance comprised between about 8 inches and about 16 inches, for instance comprised between about 10 inches and about 14 inches, for instance about 12 inches. It should be noted that such proposed dimensions may equally apply to another configuration of tapping assembly such as the tapping assembly 800 as shown in Fig. 10.

Even though in the embodiment shown in Figs. 1 to 6, the ice-tapping members 310 are substantially in register with each other (i.e., respective ice-tapping arms thereof form together lines or rows when considered in a plane perpendicular to the first rotation axis X1), it could be conceived an ice-tapping assembly 300 wherein at least some of the ice-tapping members thereof would have their components angularly offset relative to each other.

In the embodiments shown in Figs. 1-6 and 10-11, the ice-tapping members 310/810 have a similar shape, so that the following description of one of the ice-tapping members 310/810 will apply to any of them.

In the embodiment shown in Figs. 1 to 6, and as best shown in Fig. 6 which represents one of the ice-tapping members 310 of the ice-tapping assembly 300, the ice-tapping member 310 has a thickness T1 (substantially parallel to the first rotation axis X1 when mounted to the shaft 302) comprised between 1 inch and about 7 inches, for instance between about 3 inches and about 5 inches, for instance of about 4 inches. It is understood that an outer cross-section of the ice-tapping member 310 substantially corresponds to the outer cross-section of the ice-tapping assembly.

In the embodiment shown in Figs. 1 to 6, the ice-tapping member 310 has a peripheral outer surface 312 at least partially formed by one or more ice-tapping portions 314. In the embodiment shown, the ice-tapping member 310 has a shaft-mounting hub 316 (for instance substantially cylindrical) with a shaft-receiving cavity 317 formed therein which is shaped and dimensioned for the shaft 302 to be at least partially engaged therein. The ice-tapping member 310 further comprises one or more ice-tapping arms 320 extending radially and outwardly from the shaft-mounting hub 316 (mounted to an outer peripheral surface thereof or at least partially made integral therewith). Each ice-tapping arm is sized and shaped to have a distal end portion 314 thereof in contact with the ice when the ice-tapping assembly is in use

For example and without being limitative, referring to the embodiment shown in Figure 6, the ice-tapping member 310 comprises six ice-tapping arms 320 regularly angularly spaced apart from each other and formed integral with the shaft-mounting hub 316. In other words, the ice-tapping member 310 has a substantially 6-pointed stared shape. Each of the ice-tapping arms 320 thus comprises a proximal end portion mounted to or formed integral with the shaft-mounting hub 316, and an opposed distal end portion forming at least partially a corresponding one of the ice-tapping portions 314. In the embodiment shown, the distal end portions of the ice-tapping arms are substantially truncated so that an outer surface 315 of the ice-tapping portions 314 is substantially planar. For instance, the outer surface 315 has a tangential width W2 of about 1 inch. It is thus understood that the outer surfaces of the ice-tapping portions form together at least partially the peripheral outer surface 312 (or ice-tapping peripheral surface) of the ice-tapping member 310.

As best shown in Fig. 6, a plurality of ice-receiving cavities 330 are formed in the outer peripheral surface 312 between successive ice-tapping arms 320. In other words, at least two ice-tapping arms 320 extending radially from the shaft-mounting hub 316 angularly delimit together at least partially an ice-receiving cavity 330. As detailed below, the ice-receiving cavities 330 are shaped and dimensioned to receive the ice separated from the vehicle roof upon actuation of the ice-tapping assembly 300, in order to limit the risk that the separated ice would block the rotation of the ice-tapping assembly 300 (i.e., would cause a jam of the ice-tapping assembly 300).

In the embodiment wherein the ice-tapping member comprises six ice-tapping arms 320, they form three distinct diameters of the ice-tapping member angularly regularly spaced apart from each other considered in a plane transversal to the first rotation axis X1 and intersecting at a center of the ice-tapping member (i.e., intersecting in the shaft-receiving cavity 317). The diameters formed by the ice-tapping arms 320 correspond substantially to the outer cross-section of the ice-tapping member 310. The different ice-tapping arms 320 could have a substantially similar length L2 (considered from the proximal end portion to the distal end portion thereof). It could also be conceived an ice-tapping member with ice-tapping arms of different lengths (i.e., an ice-tapping member having different radii considered along a periphery thereof). For instance, the ice-tapping member has two opposed ice-tapping arms having lengths different from the lengths of the other arms, so that one of the diameters formed by the ice-tapping arms would be different from (for instance greater than) the diameters formed by the other ice-tapping arms. In the embodiment shown in Figs. 1 to 6, for instance, two ice-tapping arms are dimensioned to form a diameter of about 13 inches, whereas the other pairs of ice-tapping arms form diameters of about 12 inches.

In the embodiment shown in Figs. 10 and 11, the tapping member 810 includes a shaft-mounting hub 816 being a tubular component (for example, a hollow beam in the embodiment shown in Fig. 10) that defines an elongated shaft-receiving channel 817 for insertion and at least partial engagement of the shaft (not shown) therein. The tapping member 810 further includes at least one tapping plate 820 extending transversally to the first rotation axis X1 and outwardly at an angle from the shaft-mounting hub 816 (for instance, four tapping plates 820 extending at an angle of 90 degrees with respect to one another). The tapping plate 820 can further extend as a single piece along a length of the shaft-mounting hub 816 (i.e., along the first rotation axis X1 when mounted to the shaft). As partially shown in Fig. 10, the tapping plate 820 can have a length L1 that is substantially similar or slightly smaller than the frame length FL, for instance L1 is comprised between about 9 feet and about 15 feet, for instance comprised between about 11 feet and about 13 feet, for instance about 12 feet. The tapping plate 820 has a width W1 (transverse to the first rotation axis X1 when mounted to the shaft), for instance comprised between about 3 inches and 12 inches.

In the embodiment shown in Figs. 10 and 11, each of the ice-tapping plates 820 comprises a proximal end portion mounted to the shaft-mounting hub 816, and an opposed distal end portion forming at least partially a corresponding one of the ice-tapping portions 814. Each ice-tapping plate 820 is thus sized and shaped to have a distal end portion thereof in contact with the ice when the ice-tapping assembly 800 is in use. The proximal end portion of the tapping plate 820 can be fastened to the shaft-mounting hub via one or more fasteners including any means known to one skilled in the art for ensuring rotation of the ice-tapping plates 810 when rotating the shaft-mounting hub 816 upon actuation of the tapping assembly 800. For example and without being limitative, referring to the embodiment shown in Figure 10, the ice-tapping member 810 comprises four ice-tapping plates 820 angularly positioned with respect to one another so as to define a ninety-degree angle between each pair of adjacent plates 820. Each proximal end portion of the plates 820 can be secured to the shaft-mounting hub 816 via one or more fasteners 813, being for example rivets. Other reinforcement structures can be embedded in the plate 820 to provide further mechanical strength close to the connection with the shaft-mounting hub 816. In other words, the ice-tapping member 810 has a substantially 4-pointed mill shape.

Still referring to the embodiment shown in Figs. 10 and 11, the distal end portion of the ice-tapping plate 820 is substantially truncated so that an outer surface 815 of the ice-tapping portions 814 is substantially planar. For instance, the outer surface 815 has a tangential width W2 of about 1 inch. In addition, the distal end portion of the ice-tapping plate 820 comprises a plurality of grooves 818 extending from an edge of the distal end portion towards the proximal end portion of the ice-tapping plate 820, thereby segmenting the distal end portion of the ice-tapping plate 820 into ice-tapping portions 814. The grooves can be regularly spaced apart from one another so as to be uniformly distributed along the length of the ice-tapping plate. In the embodiment shown in Figs. 10 and 11, the grooves are shown defining a passageway having a rectangular cross-section. The dimensions of the grooves can vary to tailor the size and shape of the resulting passageway. Having grooves in the distal end portion of the ice-tapping plate enhances the abrasion applied to the ice when rotated and allows separated ice to pass through the grooves 818 to avoid accumulation between two plates 820. It further provides some flexibility to the ice-tapping plate, thus allowing portions of the ice-tapping plate to be displaced relative to each other upon actuation of the ice-tapping assembly.

The ice-tapping member 810 has a peripheral outer surface 812 at least partially formed by the ice-tapping portions 814. It is thus understood that the outer surfaces of the ice-tapping portions form together at least partially the peripheral outer surface 812 (or ice-tapping peripheral surface) of the ice-tapping member 810.

As best shown in Fig. 10, a plurality of ice-receiving cavities 830 are formed in the outer peripheral surface 812 between adjacent ice-tapping plates 820. In other words, two adjacent ice-tapping plates 820 positioned at an angle with respect to one another, when secured to the hub 816, delimit together at least partially one ice-receiving cavity 830. The ice-receiving cavities 830 are shaped and dimensioned to receive the ice separated from the vehicle roof upon actuation of the ice-tapping assembly 800.

It should be noted that the ice-tapping arm discussed with respect to the first embodiment shown in Figs. 1 to 6 and the ice-tapping plate discussed with respect with the second embodiment shown in Figs. 10 and 11 can be commonly referred to as an ice-tapping component 320/820 extending outwardly at an angle from the shaft-mounting hub 316/816 of the ice-tapping member 310/810.

In the embodiments shown in Figs. 1 to 6 and 10 to 11, each ice-tapping member 310 (for instance the shaft-mounting hub and/or the ice-tapping arms) or 810 is at least partially made of a resilient material. For instance, the resilient material has a hardness comprised between about 30 Shore A and about 80 Shore A, for instance comprised between about 45 Shore A and about 70 Shore A, for instance comprised between about 50 Shore A and about 60 Shore A, for instance of about 55 Shore A.

The ice-tapping assembly 300/800 further comprises a shaft driver (not represented) (for instance a motorized shaft driver) operatively coupled to the shaft 302/802 so as to rotate the shaft 302/802 with the plurality of ice-tapping members 310/810 mounted thereto about the first rotation axis X1. The shaft driver might be shaped and dimensioned to rotate the shaft 302/802 at varying rotational speeds. For instance, the shaft driver comprises a variable speed motor, for instance an electric variable speed motor.

It is appreciated that the shape and the configuration of the ice-tapping assembly, as well as the shape, the number, the configuration, the composition and/or the location of the different components thereof can vary from the embodiment shown. For instance, the ice-tapping member can comprise between two and eight arms.

### Ice-removing assembly (ice-removing conveyor)

In the embodiment shown, the ice-removing assembly 400 is mounted close to the rearward longitudinal beam 204 of the frame 200.

In the embodiment shown, the ice-removing assembly 400 (or ice-removing conveyor 400) comprises a plurality of ice-removing members 410 (for instance ice-removing plates or ice-removing sheet) translatable along a removing direction R transversal (for instance substantially perpendicular) to the displacement direction D when in use. For instance, the ice-removing assembly 400 comprises between 10 and 40 ice-removing members, for instance between 20 and 30 ice-removing members, for instance about 24 ice-removing members, but the dimensions and/or numbers of the ice-removing members can be adjusted as a function, for instance, of the dimensions of the vehicle roof. The removing direction R is thus substantially perpendicular to the vehicle length L, so that the ice-removing assembly 400 is configured to push the ice separated from the vehicle roof upon actuation of the ice-tapping assembly off the roof and over the sides of the vehicle.

The ice-removing assembly 400 thus extends substantially parallel to and rearward of the ice-tapping assembly 300. For instance, a length of the ice-removing assembly 400, considered along the removing direction R, corresponds substantially to the length of the ice-tapping assembly.

The ice-removing assembly 400 comprises first and second endless chains 402, 404, substantially parallel to each other, for instance surrounding spaced-apart left and right pulleys arranged at opposed sides of the frame 200. The first and second endless chains extend along the removing direction R and have a length substantially equal to twice the length of the ice-removing assembly (for instance about 24 feet). The ice-removing members 410 extend between the first and second endless chains 402, 404. For instance, the ice-removing members 410 are regularly spaced apart from each other.

It is understood that, when the ice-removing members 410 are displaced along the removing direction R, at least a lower portion thereof is close to the vehicle roof. When the ice-removing members 410 are displaced along an opposed return direction, the ice-removing members 410 are above and spaced apart from the vehicle roof.

In the shown embodiment, the ice-removing members 410 have a similar shape, so that the following description of one of the ice-removing members 410 (or plates) will apply to any of them.

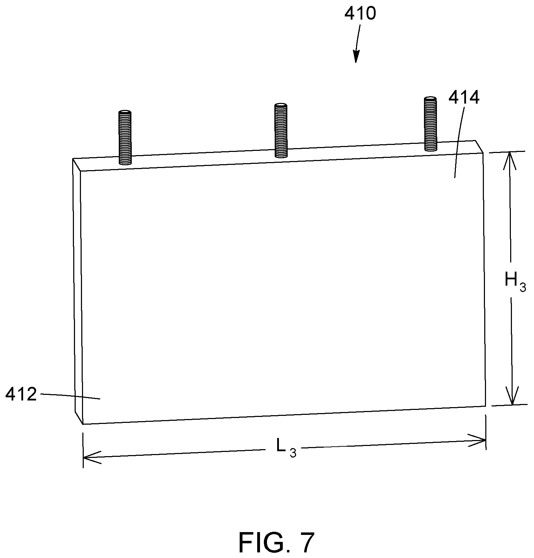

For instance, the ice-removing plate 410, as represented in Fig. 7, is substantially rectangular; the ice-removing plate 410 has a plate length L3 comprised between about 5 inches and about 15 inches, for instance comprised between about 7 inches and about 13 inches, for instance of about 10 inches. The ice-removing plate 410 has a plate height H3 comprised between about 3 inches and about 9 inches, for instance comprised between about 5 inches and about 7 inches, for instance of about 6 inches.

The ice-removing plate 410 has an ice-removing portion 412 (for instance a lower end portion when the ice-removing plate 410 is displaced along the removal direction) and an opposed chain-mounting end portion 414. For instance, the chain-mounting end portion 414 is mounted to a shaft extending between the endless chains.

The ice-removing plate 410 (for instance at least the ice-removing portion 412 thereof) is at least partially made of a resilient material. For instance, the resilient material of the ice-removing plate 410 has a hardness comprised between about 30 Shore A and about 80 Shore A, for instance comprised between about 45 Shore A and about 70 Shore A, for instance comprised between about 50 Shore A and about 60 Shore A, for instance of about 55 Shore A.

The ice-removing assembly 400 further comprises an ice-remover actuating device (not represented) (for instance a conveyor driver or a motorized conveyor driver) operatively coupled to the endless chains 402, 404 so as to displace a lower row of ice-removing members 410 in the removing direction and to displace an upper row of ice-removing members 410 in the return direction. The conveyor driver might be shaped and dimensioned to actuate the conveyor 400 at varying speeds. For instance, the conveyor driver comprises a variable speed motor, for instance an electric variable speed motor. For instance, the ice-removing assembly is arranged so that the removal direction is toward a direction opposed to the location of the ice-remover actuating device. In other words, the ice-removing assembly 400 is configured to remove the ice away from the ice-remover actuating device.

It is appreciated that the shape and the configuration of the ice-removing assembly, as well as the shape, the number, the configuration, the composition and/or the location of the different components thereof can vary from the embodiment shown.

### Other possible features of the clearing apparatus

As represented for instance in Fig. 3, the ice-clearing apparatus 100 might further comprise an ice deflector 130 mounted to the frame 200 and surrounding at least partially the ice-tapping assembly 300. For instance, the ice-deflector 130 extends substantially along the length of the ice-tapping assembly 300, between the ice-tapping assembly 300 and the ice-removing assembly 400. The ice deflector 130 is shaped and dimensioned to direct the ice separated from the vehicle roof upon rotation of the ice-tapping assembly 300 toward the ice-removing assembly 400. For instance, the ice deflector 130 extends from an upper part of the ice-tapping assembly 300 towards the ice-removing assembly 400 (i.e., to a front portion and/or the lower row of the ice-removing members 410 of the ice-removing assembly 400).

The ice deflector 130 is at least partially made of a resilient material. For instance, the resilient material of the ice deflector 130 has a hardness comprised between about 40 Shore A and about 120 Shore A, for instance comprised between about 60 Shore A and about 100 Shore A, for instance comprised between about 70 Shore A and about 90 Shore A, for instance of about 80 Shore A. The material forming the ice deflector is for instance harder than the resilient material forming at least partially the ice-tapping assembly and/or the ice-removing assembly.

As represented in Figure 3, the ice-clearing apparatus 100 might further comprise an ice-collecting plate 140 mounted to the frame 200 and forming at least partially a rearward end portion of the ice-clearing apparatus 100. For instance, the ice-collecting plate 140 is rearward of the ice-removing assembly 400. For instance, the ice-collecting plate 140 extends substantially along the length of the ice-removing assembly 400, rearward and in the vicinity of the ice-removing members 410 thereof. The ice-collecting plate 140 is shaped and dimensioned to direct toward the ice-removing assembly 400 any ice that would remain on the vehicle roof rearward of the ice-tapping assembly 300 and the ice-removing assembly 400. The ice-collecting plate 140 thus comprises a lower ice-removing end portion, forming at least partially a roof-contacting surface close to or in contact with the vehicle roof when the ice-clearing apparatus is in use. The ice-collecting plate has a plate height comprised between about 12 inches and about 36 inches, for instance comprised between about 18 inches and about 30 inches, for instance of about 24 inches.

The ice-collecting plate 140 is at least partially made of a resilient material. For instance, the resilient material of the ice-collecting plate 140 has a hardness comprised between about 40 Shore A and about 120 Shore A, for instance comprised between about 60 Shore A and about 100 Shore A, for instance comprised between about 70 Shore A and about 90 Shore A, for instance of about 80 Shore A. The material forming the ice-collecting plate is for instance similar to the material forming at least partially the ice deflector and/or is for instance harder than the resilient material forming at least partially the ice-tapping assembly and/or the ice-removing assembly.

It is appreciated that the shape and the configuration of the ice deflector and the ice-collecting plate can vary from the embodiment shown. It could also be conceived an ice-clearing apparatus without an ice deflector and/or without an ice-collecting plate.

In the embodiment shown, the ice-clearing apparatus 100 also comprises a controller (not represented). For instance, the controller is operatively coupled to at least one of the ice-tapping assembly 300 and the ice-removing assembly 400. For instance, the controller is operatively coupled to the shaft driver of the ice-tapping assembly so as to adjust and/or adapt a rotational speed of the shaft 302, depending on measured features and/or properties and/or received instructions. The controller might also be operatively coupled to the conveyor device of the ice-removing assembly 400 so as to adjust and/or adapt a speed of the conveyor depending on measured features and/or properties and/or received instructions. The controller might also be operatively coupled to the vehicle, for instance to headlights thereof, in order to emit a visual signal when the ice-clearing apparatus is actuated and when ice is removed from the vehicle roof.

It is appreciated that the shape, the configuration, and the location of the ice-deflector, the ice-collecting plate and the controller can vary from the embodiment shown.

### Clearing system

The present disclosure also concerns a system that can be referred to as an ice-clearing system 500 (when clearing a material being ice) to clear the ice from the vehicle roof, as represented in Fig. 8. The ice-clearing system 500 comprises the ice-clearing apparatus 100 as described herein, and a support structure 600, with the ice-clearing apparatus 100 being mounted to the support structure 600 so as to hang from the support structure at a height above ground level and allowing passage of a vehicle thereunder.

In the embodiment shown, the support structure 600 comprises two vertical post 610, 620 (or vertical support assemblies 610, 620, or vertical post assemblies 610, 620) separated by a distance sufficient to move a vehicle therebetween. For instance, the first and second verticals post assemblies 610, 620 are separated by a distance sufficient to easily move a semi-trailer with a container trailer or an open-top tarped trailer, deliver truck, school bus, or highway coach bus therebetween. For instance, the first and second vertical post assemblies 610, 620 comprise a weighted base 612, 622 to contribute to the stability of the support structure 600.

For example, Fig. 8 shows an embodiment (600) of the support structure forming an archway. The support structure 600 further comprises an upper cross piece 630 (or horizontal support member 630) forming an overhead bridge structure extending between the two vertical support assemblies 610, 620. In other words, the support structure is substantially U-shaped.

In the embodiment shown, the ice-clearing apparatus 100 extends between the first and second vertical post assemblies 610, 620, below and substantially parallel to the upper cross piece 630.

For instance, the ice-clearing apparatus 100 is movable along the two vertical support assemblies 610, 620 in order to adjust a height of the ice-clearing apparatus above ground level, and thus a vertical position of the ice-clearing apparatus above the vehicle roof when in use. For the instance, the horizontal support member 630 is shaped and dimensioned to support a winch 640 - or apparatus-lifting assembly 640 - from which the ice-clearing apparatus 100 is supported by a chain 642 or cable connected. An operator at ground level can thus operate the apparatus-lifting assembly 640 to raise or lower the ice-clearing apparatus 100 to clear ice from vehicles of different heights. The first and second vertical support assemblies 610, 620 might also be shaped and dimensioned so as to guide a vertical displacement of the ice-clearing apparatus along the support assemblies 610, 620, upon actuation of the lifting carriage assembly 640.

The lifting carriage assembly 640 might be operatively coupled to the above-mentioned controller so as to selectively move the ice-clearing apparatus 100 along longitudinal axes (i.e., vertical axes in the embodiment shown) defined by the first and second vertical support assemblies 610, 620. For instance, the controller might be operatively coupled to a pressure sensor arranged on the vehicle roof and/or the ice-clearing apparatus to adjust a vertical position of the ice-clearing apparatus via the actuation of the lifting carriage assembly as a function of a pressure applied by the ice-clearing apparatus onto the vehicle roof that would be measured by the pressure sensor.

For instance, the support structure 600 is at least partially made of steel, for instance made of an assembly of steel members or steel beams secured (for instance welded) to each other. For instance, the support structure has a height comprised between about 10 feet and about 30 feet, for instance between 15 feet and about 25 feet, for instance of about 20 feet. For instance, a width of a vehicle-receiving space at least partially delimited by the first and second vertical support assemblies 610, 620 and the horizontal support member 630 is comprised between about 10 feet and about 20 feet, for instance comprised between about 12 feet and about 18 feet, for instance of about 15 feet.

It is appreciated that the shape and the configuration of the support structure, and the number, the components and the shape of the different components thereof can vary from the embodiment shown. For instance, Fig. 9 represents another possible embodiment of the support structure 700, having a larger footprint and forming an elongated pathway that is adapted to a length of the vehicle roof.

In the embodiment shown in Fig. 9, the support structure 700 comprises a plurality of arch-shaped structures 710, 720, 730, 740 forming together a substantially tunnel-shaped structure. For instance, the support structure 700 has a height comprised between about 10 feet and about 30 feet, for instance between about 15 feet and about 25 feet, for instance of about 20 feet. For instance, a width of a vehicle-receiving space at least partially delimited by the arch-shaped structures 710, 720, 730, 740 is comprised between about 10 feet and about 20 feet, for instance comprised between about 12 feet and about 18 feet, for instance of about 15 feet. For instance, a length of a vehicle-receiving space at least partially delimited by the arch-shaped structures 710, 720, 730, 740 is comprised between about 20 feet and about 100 feet, for instance comprised between about 40 feet and about 80 feet, for instance of about 60 feet.

In the embodiment shown in Fig. 9, the support structure 700 further comprises at least one longitudinal apparatus-guiding rail 750, 752, 754 (three, in the embodiment shown) to displace the ice-clearing apparatus 100 along the displacement direction D. For instance, the longitudinal apparatus-guiding rails 750, 752, 754 are mounted (for instance, welded) to a lower surface of horizontal support members of each of the arch-shaped structures 710, 720, 730, 740. For instance, the longitudinal apparatus-guiding rails 750, 752, 754 are substantially parallel to each other, and spaced apart from each other (for instance from a distance comprised between about 2 feet and about 10 feet, for instance comprised between about 4 feet and about 8 feet, for instance of about 6 feet). For instance, the above-mentioned apparatus-lifting assembly is mounted to one of the longitudinal apparatus-guiding rails (for instance, to a central one). The support structure 700 might thus be shaped and dimensioned for the ice-clearing apparatus 100 to be displaced along the longitudinal apparatus-guiding rails 750, 752, 754, within the vehicle-receiving cavity at least partially delimited by the arch-shaped structures 710, 720, 730, 740. The present disclosure is not limited to a support structure that would be shaped and dimensioned to guide the ice-clearing apparatus along one of the longitudinal apparatus-guiding rails 750, 752, 754. It could for instance be conceived a support structure comprising an endless chain (or any other towing assembly) extending longitudinally, the ice-clearing apparatus being mounted to the endless chain so as to be towed along the support structure upon actuation of the endless chain.

### Method for clearing ice from a vehicle roof

According to another aspect of the disclosure, there is provided a method for clearing ice from a vehicle roof. The method according to embodiments of the present disclosure may be carried out with an ice-clearing system such as those described above.

The present invention therefore provides an inexpensive, rapid, and safe way to clear ice from truck and trailer roofs. It limits the intervention of the driver and contributes to their safety.

For instance, the method comprises a step of arranging the vehicle in a vehicle-receiving space at least partially delimited by a support structure (for instance, a light could be provided to emit a visual signal when a suitable position of the vehicle in the vehicle-receiving space is reached); a step of positioning an ice-clearing apparatus mounted to the support structure close to an upper surface of the vehicle roof (for instance, upon actuation of an apparatus-lifting assembly mounted to the support structure and configured to displace the ice-clearing apparatus along vertical support assemblies of the support structure).

The method further comprises a step of actuating an ice-tapping assembly of the ice-clearing apparatus to exert a downward pressure onto the ice on the vehicle roof via tapping and to separate the ice from the vehicle roof upon tapping of the ice-tapping assembly onto the vehicle roof. The actuating of the ice-tapping assembly can include, as shown in the illustrated embodiments, rotating the ice-tapping assembly 300 of the ice-clearing apparatus about a first rotation axis substantially transversal to a roof length, the ice-tapping assembly being at least partially made of a resilient material.

The method further comprises a step of actuating an ice-removing assembly mounted of the ice-clearing apparatus, the ice-removing assembly displacing the separated ice away from the vehicle roof.

The method further comprises a step of displacing the ice-clearing apparatus along the roof length in a displacement direction, either via displacement of the ice-clearing apparatus along a longitudinal apparatus-guiding rail of the support structure, or via displacement of the vehicle within the vehicle-receiving spaced at least partially delimited by the support structure.

It is understood that a speed of the displacement of the vehicle relative to the ice-clearing apparatus will depend, for instance and without being limitative, on the shape and dimensions of the ice-tapping members, a rotational speed of the shaft of the ice-tapping assembly, the shape and dimensions of the ice-removing members, a distance between successive ice-removing members, a speed of displacement of the ice-removing members, the shape and dimensions of the vehicle roof, a quantity of ice onto the vehicle roof, an outside temperature and the like.

The method might further comprise a step of vertically displacing the ice-clearing apparatus away from the vehicle roof, once the ice clearing is considered to be completed, and a step of longitudinally displacing the ice-clearing apparatus along the longitudinal apparatus-guiding rail of the support structure, to configure the ice-clearing apparatus in a configuration wherein ice could be removed from a second vehicle roof.

It is thus understood that the ice-apparatus and the ice-clearing system according to the present disclosure are configured to allow an ice clearing of the vehicle roof even when the vehicle remains motionless, in order not to depend on a vehicle speed and/or a capability of a driver thereof to displace the vehicle at a suitable speed. Moreover, all the contacts of the ice-apparatus onto the vehicle roof are via resilient materials with a hardness configured to limit the risk of damaging the vehicle roof.

As represented in Fig. 3, the ice-tapping assembly is rotated about the first rotation axis X1 in a rotation direction R1 configured to direct the separated ice toward the ice-removing assembly 400. Considered in a plane perpendicular to the first rotation axis X1 with the ice-tapping assembly 300 being to the left of the ice-removing assembly 400, the ice-tapping assembly 300 is rotated in a counter-clockwise direction R1 about the first rotation axis X1. In other words, the ice-tapping assembly 300 is rotated in a direction configured to direct the separated ice rearwardly, considered with respect to the displacement direction D of the ice-clearing apparatus relative to the vehicle roof. The shape and dimensions of the ice-tapping assembly 300 (for instance, the shape, the dimensions and the material of the ice-tapping members thereof), the adjustable rotational speed of the ice-tapping assembly, the adjustable speed of the longitudinal displacement of the ice-clearing apparatus allows the clearing of ice on the vehicle roof. The ice-tapping members of the ice-tapping assembly (for instance the fact that the ice-tapping member has two opposed ice-tapping arms having lengths different from the lengths of the other arms) contribute to the tapping (i.e., the application of successive hits onto the vehicle roof) which ensures an efficient clearing of the ice without damaging the vehicle roof.

The ice-removing assembly contributes to an efficiency of the pushing of ice, or any material needed to be cleared, off the roof and over the sides of the vehicle, or any other substantially planar item. A distance from the vehicle to which the ice is cleared can be adjusted, for instance, as a function of the speed of the ice-removing conveyor. Moreover, the ice-clearing system enables the clearing of the ice along an entirety of the length of the space surrounding the vehicle, when the vehicle is stationary, thus limiting the need to remove the ice surrounding the cleared vehicles.

Several alternative embodiments and examples have been described and illustrated herein. The embodiments of the invention described above are intended to be exemplary only. A person of ordinary skill in the art would appreciate the features of the individual embodiments, and the possible combinations and variations of the components. A person of ordinary skill in the art would further appreciate that any of the embodiments could be provided in any combination with the other embodiments disclosed herein. It is understood that the invention may be embodied in other specific forms without departing from the central characteristics thereof. The present examples and embodiments, therefore, are to be considered in all respects as illustrative and not restrictive, and the invention is not to be limited to the details given herein. Accordingly, while the specific embodiments have been illustrated and described, numerous modifications come to mind. The scope of the invention is therefore intended to be limited by the scope of the appended claims.

In the following description, the same numerical references refer to similar elements. Furthermore, for the sake of simplicity and clarity, namely so as to not unduly burden the figures with several references numbers, not all figures contain references to all the components and features, and references to some components and features may be found in only one figure, and components and features of the present disclosure which are illustrated in other figures can be easily inferred therefrom. The embodiments, geometrical configurations, materials mentioned and/or dimensions shown in the figures are optional, and are given for exemplification purposes only.

Moreover, it will be appreciated that positional descriptions such as "above", "below", "forward", "rearward", "left", "right" and the like should, unless otherwise indicated, be taken in the context of the figures and drawings only and should not be considered limiting. Moreover, the figures are meant to be illustrative of certain characteristics of the ice-clearing apparatus and the ice-clearing system and are not necessarily to scale.

To provide a more concise description, some of the quantitative expressions given herein may be qualified with the term "about". It is understood that whether the term "about" is used explicitly or not, every quantity given herein is meant to refer to an actual given value, and it is also meant to refer to the approximation to such given value that would reasonably be inferred based on the ordinary skill in the art, including approximations due to the experimental and/or measurement conditions for such given value. In the following description, an embodiment is an example or implementation. The various appearances of "one embodiment", "an embodiment" or "some embodiments" do not necessarily all refer to the same embodiments. Although various features may be described in the context of a single embodiment, the features may also be provided separately or in any suitable combination. Conversely, although the invention may be described herein in the context of separate embodiments for clarity, it may also be implemented in a single embodiment. Reference in the specification to "some embodiments", "an embodiment", "one embodiment" or "other embodiments" means that a particular feature, structure, or characteristic described in connection with the embodiments is included in at least some embodiments, but not necessarily all embodiments.

It is to be understood that the phraseology and terminology employed herein is not to be construed as being limited and are for descriptive purpose only. The principles and uses of the teachings of the present disclosure may be better understood with reference to the accompanying description, figures and examples. It is to be understood that the details set forth herein do not construe a limitation to an application of the disclosure. It is to be understood that the terms "including", "comprising", and grammatical variants thereof do not preclude the addition of one or more components, features, steps, or integers or groups thereof and that the terms are to be construed as specifying components, features, steps or integers. If the specification or claims refer to "an additional" element, that does not preclude there being more than one of the additional element. It is to be understood that where the claims or specification refer to "a" or "an" element, such reference is not construed as meaning that there is only one of that element. It is to be understood that where the specification states that a component, feature, structure, or characteristic "may", "might", "can" or "could" be included, that particular component, feature, structure, or characteristic is not required to be included.

## Claims

1. An ice-clearing apparatus (100) for clearing ice from a vehicle roof defining a roof length (L), the ice-clearing apparatus (100) being displaceable along the roof length (L) in a displacement direction (D), the ice-clearing apparatus (100) comprising:
a frame (200) arrangeable above the vehicle roof; and
an ice-tapping assembly (300, 800) rotatably mounted to the frame (200) about a first rotation axis (X1) substantially transversal to the roof length (L) when in use, **characterized in that** the ice-tapping assembly (300, 800) is at least partially made of a resilient material and is configured to contact the ice with the resilient material and further actuated to exert a downward pressure via tapping onto the ice from the vehicle roof thereby at least partially separating the ice from the vehicle roof upon tapping of the ice-tapping assembly (300, 800) onto the vehicle roof.

2. The ice-clearing apparatus (100) according to claim 1, further comprising an ice-removing assembly (400) mounted to the frame (200) and arranged, considered along the displacement direction (D), rearwardly of the ice-tapping assembly (300, 800), the ice-removing assembly (400) being configured to displace the separated ice away from the vehicle roof.

3. The ice-clearing apparatus (100) according to claim 1 or 2, wherein the ice-tapping assembly (300, 800) comprises a shaft (302) rotatably mounted to the frame (200) about the first rotation axis (X1) and at least one ice-tapping member (310) mounted to the shaft (302) and extending radially therefrom, with the ice-tapping member (310) being at least partially made of the resilient material.

4. The ice-clearing apparatus (100) according to claim 3, wherein the at least one ice-tapping member (310) defines a central shaft-receiving cavity (317), the shaft (302) being inserted in the central shaft-receiving cavity (317) to trigger rotation of the at least one ice-tapping member (310) when rotated.

5. The ice-clearing apparatus (100) according to claim 4, wherein the at least one ice-tapping member (310) comprises:
a shaft-mounting hub (316) defining the shaft-receiving cavity (317), and
at least one ice-tapping component (320, 820) extending outwardly at an angle from the shaft-mounting hub (316), the at least one ice-tapping component (320, 820) being in contact with the ice at a distal end portion (314) thereof when the ice-tapping assembly (300, 800) is in use.

6. The ice-clearing apparatus (100) according to claim 5, wherein the at least one ice-tapping component (320, 820) comprises multiple ice-tapping components (320, 820) that are regularly angularly spaced apart from each other and made integral with the shaft-mounting hub (316), each one of the multiple ice-tapping components (320, 820) optionally being an ice-tapping arm (320) extending radially from the shaft-mounting hub (316), and the ice-tapping member (310) further optionally comprising at least six tapping arms (320).

7. The ice-clearing apparatus (100) according to claim 6, wherein the at least one ice-tapping member (310) comprises multiple ice-tapping members (310) being adjacently mounted to the shaft (302) along the first rotation axis (X1) when inserted in corresponding shaft-receiving cavity (317) of each ice-tapping member (310), and the plurality of ice-tapping members (310) optionally being installed in alignment with respect to one another along the first rotation axis (X1).

8. The ice-clearing apparatus (100) according to claim 5, wherein the at least one ice-tapping component (320, 820) comprises multiple ice-tapping components (320, 820) that are positioned at an angle with respect to one another and fastened to the shaft-mounting hub (316), and each one of the multiple ice-tapping components (320, 820) optionally being an ice-tapping plate (820) having a length extending along the shaft-mounting hub (316) and a width extending transversally to the first rotation axis (X1).

9. The ice-clearing apparatus (100) according to any one of claims 2 to 8, wherein the ice-removing assembly (400) comprises a plurality of ice-removing members (410) translatable along a removing direction (R) substantially perpendicular to the displacement direction (D) when in use, and at least one of the plurality of ice-removing members (410) being at least partially made of a resilient material.

10. The ice-clearing apparatus (100) according to any one of claims 1 to 9, further comprising at least one of an ice deflector (130) surrounding at least partially the ice-tapping assembly (300, 800) and configured to direct the separated ice toward the ice-removing assembly (400), or an ice-collecting plate (140) rearward of the ice-removing assembly (400), the ice-collecting plate (140) comprising a roof-contacting surface.

11. An ice-clearing system (500) comprising:
an ice-clearing apparatus (100) according to any one of claims 1 to 10; and
a support structure (600), the ice-clearing apparatus (100) being operatively connected to the support structure (600) so as to position the ice-clearing apparatus (100) at a height above ground level and ensure contact of at least a portion of the ice-tapping assembly (300, 800) with the ice of the vehicle roof when in use.

12. The ice-clearing system (500) according to claim 11, wherein the support structure comprises two vertical support assemblies (610, 620) separated by a distance sufficient to move a vehicle therebetween.

13. The ice-clearing system (500) according to claim 11 or 12, further comprising an apparatus-lifting assembly (640) to configure the ice-clearing apparatus (100) in at least two vertical positions.

14. A method for clearing ice from a roof of a vehicle, the method comprising:
arranging the vehicle in a vehicle-receiving space at least partially delimited by a support structure (600);
positioning an ice-clearing apparatus (100) mounted to the support structure close to an upper surface of the vehicle roof; and actuating an ice-tapping assembly (300, 800) of the ice-clearing apparatus (100) extending substantially transversally to a roof length, **characterized in that** the ice-tapping assembly (300, 800) is configured to exert a downward pressure onto the ice on the vehicle roof via tapping and to separate the ice from the vehicle roof upon tapping of the ice-tapping assembly (300, 800) onto the vehicle roof, the ice-tapping assembly (300, 800) being at least partially made of a resilient material .

15. The method according to claim 14, further comprising actuating an ice-removing assembly (400) of the ice-clearing apparatus, the ice-removing assembly (400) displacing the separated ice away from the vehicle roof.

## Patentansprüche

1. Eisräumvorrichtung (100) zum Räumen von Eis von einem Fahrzeugdach, das eine Dachlänge (L) definiert, wobei die Eisräumvorrichtung (100) entlang der Dachlänge (L) in einer Verschieberichtung (D) verschiebbar ist, wobei die Eisräumvorrichtung (100) umfasst:
einen Rahmen (200), der oberhalb des Fahrzeugdachs anordenbar ist; und
eine Eisklopfanordnung (300, 800), die an dem Rahmen (200) um eine erste Drehachse (X1) drehbar gelagert ist, die in Gebrauch im Wesentlichen quer zur Dachlänge (L) verläuft, **dadurch gekennzeichnet, dass** die Eisklopfanordnung (300, 800) zumindest teilweise aus einem elastischen Material besteht und dazu konfiguriert ist, mit dem elastischen Material in Kontakt mit dem Eis zu treten, und ferner betätigt wird, um durch Klopfen einen nach unten gerichteten Druck auf das Eis auf dem Fahrzeugdach auszuüben, wodurch das Eis beim Aufklopfen der Eisklopfanordnung (300, 800) auf das Fahrzeugdach zumindest teilweise vom Fahrzeugdach getrennt wird.

2. Eisräumvorrichtung (100) nach Anspruch 1, ferner umfassend eine Eisentfernungsanordnung (400), die an dem Rahmen (200) montiert und, betrachtet entlang der Verschieberichtung (D), hinter der Eisklopfanordnung (300, 800) angeordnet ist, wobei die Eisentfernungsanordnung (400) dazu konfiguriert ist, das abgetrennte Eis vom Fahrzeugdach wegzuschieben.

3. Eisräumvorrichtung (100) nach Anspruch 1 oder 2, wobei die Eisklopfanordnung (300, 800) eine Welle (302), die an dem Rahmen (200) um die erste Drehachse (X1) drehbar gelagert ist, und mindestens ein Eisklopfelement (310) umfasst, das an der Welle (302) montiert ist und sich radial von dieser erstreckt, wobei das Eisklopfelement (310) zumindest teilweise aus dem elastischen Material besteht.

4. Eisräumvorrichtung (100) nach Anspruch 3, wobei das mindestens eine Eisklopfelement (310) einen zentralen Wellenaufnahmehohlraum (317) definiert, wobei die Welle (302) in den zentralen Wellenaufnahmehohlraum (317) eingeführt ist, um eine Drehung des mindestens einen Eisklopfelements (310) bei Drehung auszulösen.

5. Eisräumvorrichtung (100) nach Anspruch 4, wobei das mindestens eine Eisklopfelement (310) umfasst:
eine Wellenmontagenabe (316), die den Wellenaufnahmehohlraum (317) definiert, und
mindestens eine Eisklopfkomponente (320, 820), die sich in einem Winkel von der Wellenmontagenabe (316) nach außen erstreckt, wobei die mindestens eine Eisklopfkomponente (320, 820) in Gebrauch der Eisklopfanordnung (300, 800) an einem distalen Endabschnitt (314) davon in Kontakt mit dem Eis steht.

6. Eisräumvorrichtung (100) nach Anspruch 5, wobei die mindestens eine Eisklopfkomponente (320, 820) mehrere Eisklopfkomponenten (320, 820) umfasst, die regelmäßig winkelig voneinander beabstandet und einstückig mit der Wellenmontagenabe (316) ausgebildet sind, wobei jede der mehreren Eisklopfkomponenten (320, 820) optional ein Eisklopfarm (320) ist, der sich radial von der Wellenmontagenabe (316) erstreckt, und das Eisklopfelement (310) optional ferner mindestens sechs Klopfarme (320) umfasst.

7. Eisräumvorrichtung (100) nach Anspruch 6, wobei das mindestens eine Eisklopfelement (310) mehrere Eisklopfelemente (310) umfasst, die benachbart an der Welle (302) entlang der ersten Drehachse (X1) montiert sind, wenn sie in den entsprechenden Wellenaufnahmehohlraum (317) jedes Eisklopfelements (310) eingeführt sind, und wobei die Mehrzahl von Eisklopfelementen (310) optional in fluchtender Ausrichtung zueinander entlang der ersten Drehachse (X1) installiert ist.

8. Eisräumvorrichtung (100) nach Anspruch 5, wobei die mindestens eine Eisklopfkomponente (320, 820) mehrere Eisklopfkomponenten (320, 820) umfasst, die in einem Winkel zueinander angeordnet und an der Wellenmontagenabe (316) befestigt sind, und wobei jede der mehreren Eisklopfkomponenten (320, 820) optional eine Eisklopfplatte (820) ist, die eine sich entlang der Wellenmontagenabe (316) erstreckende Länge und eine sich quer zur ersten Drehachse (X1) erstreckende Breite aufweist.

9. Eisräumvorrichtung (100) nach einem der Ansprüche 2 bis 8, wobei die Eisentfernungsanordnung (400) eine Mehrzahl von Eisentfernungselementen (410) umfasst, die entlang einer Entfernungsrichtung (R) translationsbeweglich sind, die im Betrieb im Wesentlichen senkrecht zur Verschieberichtung (D) verläuft, und wobei mindestens eines der Mehrzahl von Eisentfernungselementen (410) zumindest teilweise aus einem elastischen Material besteht.

10. Eisräumvorrichtung (100) nach einem der Ansprüche 1 bis 9, ferner umfassend mindestens eines von einem Eisumlenker (130), der die Eisklopfanordnung (300, 800) zumindest teilweise umgibt und dazu konfiguriert ist, das abgetrennte Eis zur Eisentfernungsanordnung (400) zu leiten, oder einer Eissammelplatte (140) hinter der Eisentfernungsanordnung (400), wobei die Eissammelplatte (140) eine dachberührende Fläche umfasst.

11. Eisräumsystem (500), umfassend:
eine Eisräumvorrichtung (100) nach einem der Ansprüche 1 bis 10; und
eine Tragstruktur (600), wobei die Eisräumvorrichtung (100) mit der Tragstruktur (600) wirkverbunden ist, um die Eisräumvorrichtung (100) in einer Höhe über Bodenniveau zu positionieren und den Kontakt zumindest eines Teils der Eisklopfanordnung (300, 800) mit dem Eis auf dem Fahrzeugdach im Betrieb sicherzustellen.

12. Eisräumsystem (500) nach Anspruch 11, wobei die Tragstruktur zwei vertikale Trageinheiten (610, 620) umfasst, die durch einen Abstand voneinander getrennt sind, der ausreicht, um ein Fahrzeug dazwischen hindurchzubewegen.

13. Eisräumsystem (500) nach Anspruch 11 oder 12, ferner umfassend eine Vorrichtungshebeanordnung (640), um die Eisräumvorrichtung (100) in mindestens zwei vertikalen Positionen zu konfigurieren.

14. Verfahren zum Räumen von Eis von einem Dach eines Fahrzeugs, wobei das Verfahren umfasst: Anordnen des Fahrzeugs in einem Fahrzeugaufnahmeraum, der zumindest teilweise durch eine Tragstruktur (600) begrenzt wird; Positionieren einer an der Tragstruktur montierten
Eisräumvorrichtung (100) nahe einer Oberseite des Fahrzeugdachs; und
Betätigen einer Eisklopfanordnung (300, 800) der Eisräumvorrichtung (100), die sich im Wesentlichen quer zu einer Dachlänge erstreckt, **dadurch gekennzeichnet, dass** die Eisklopfanordnung (300, 800) dazu konfiguriert ist, durch Klopfen einen nach unten gerichteten Druck auf das Eis auf dem Fahrzeugdach auszuüben und das Eis beim Aufklopfen der Eisklopfanordnung (300, 800) auf das Fahrzeugdach vom Fahrzeugdach zu trennen, wobei die Eisklopfanordnung (300, 800) zumindest teilweise aus einem elastischen Material besteht.

15. Verfahren nach Anspruch 14, ferner umfassend das Betätigen einer Eisentfernungsanordnung (400) der Eisräumvorrichtung, wobei die Eisentfernungsanordnung (400) das abgetrennte Eis vom Fahrzeugdach wegschiebt.

## Revendications

1. Appareil d'élimination de glace (100) pour éliminer la glace se trouvant sur un toit de véhicule définissant une longueur de toit (L), l'appareil d'élimination de glace (100) étant mobile le long de la longueur de toit (L) dans une direction de déplacement (D), l'appareil d'élimination de glace (100) comprenant :
un châssis (200) pouvant être agencé au-dessus du toit de véhicule ; et
un ensemble de tapotage de glace (300, 800) monté de manière rotative sur le châssis (200) autour d'un premier axe de rotation (X1) sensiblement transversal à la longueur de toit (L) lors de l'utilisation, **caractérisé en ce que** l'ensemble de tapotage de glace (300, 800) est au moins partiellement constitué d'un matériau élastique et est configuré pour entrer en contact avec la glace par le biais du matériau élastique et en outre actionné pour exercer une pression vers le bas par tapotage sur la glace se trouvant sur le toit de véhicule, séparant ainsi au moins partiellement la glace du toit de véhicule lors du tapotage de l'ensemble de tapotage de glace (300, 800) sur le toit de véhicule.

2. Appareil d'élimination de glace (100) selon la revendication 1, comprenant en outre un ensemble d'élimination de glace (400) monté sur le châssis (200) et agencé, considéré le long de la direction de déplacement (D), à l'arrière de l'ensemble de tapotage de glace (300, 800), l'ensemble d'élimination de glace (400) étant configuré pour déplacer la glace séparée à l'écart du toit de véhicule.

3. Appareil d'élimination de glace (100) selon la revendication 1 ou 2, dans lequel l'ensemble de tapotage de glace (300, 800) comprend un arbre (302) monté de manière rotative sur le châssis (200) autour d'un premier axe de rotation (X1) et au moins un élément de tapotage de glace (310) monté sur l'arbre (302) et s'étendant radialement à partir de celui-ci, l'élément de tapotage de glace (310) étant au moins partiellement constitué du matériau élastique.

4. Appareil d'élimination de glace (100) selon la revendication 3, dans lequel l'au moins un élément de tapotage de glace (310) définit une cavité centrale de réception d'arbre (317), l'arbre (302) étant inséré dans la cavité centrale de réception d'arbre (317) pour déclencher la rotation de l'au moins un élément de tapotage de glace (310) lorsqu'il tourne.

5. Appareil d'élimination de glace (100) selon la revendication 4, dans lequel l'au moins un élément de tapotage de glace (310) comprend :
un moyeu de montage d'arbre (316) définissant la cavité de réception d'arbre (317), et
au moins un composant de tapotage de glace (320, 820) s'étendant vers l'extérieur selon un angle à partir du moyeu de montage d'arbre (316), l'au moins un composant de tapotage de glace (320, 820) étant en contact avec la glace au niveau d'une partie d'extrémité distale (314) de celui-ci lorsque l'ensemble de tapotage de glace (300, 800) est en cours d'utilisation.

6. Appareil d'élimination de glace (100) selon la revendication 5, dans lequel l'au moins un composant de tapotage de glace (320, 820) comprend de multiples composants de tapotage de glace (320, 820) qui sont espacés de manière angulaire régulière les uns des autres et formés d'un seul tenant avec le moyeu de montage d'arbre (316), chacun des multiples composants de tapotage de glace (320, 820) étant optionnellement un bras de tapotage de glace (320) s'étendant radialement à partir du moyeu de montage d'arbre (316), et l'élément de tapotage de glace (310) comprenant en outre optionnellement au moins six bras de tapotage (320).

7. Appareil d'élimination de glace (100) selon la revendication 6, dans lequel l'au moins un élément de tapotage de glace (310) comprend de multiples éléments de tapotage de glace (310) étant montés de manière adjacente sur l'arbre (302) le long du premier axe de rotation (X1) lorsqu'ils sont insérés dans une cavité de réception d'arbre correspondante (317) de chaque élément de tapotage de glace (310), et la pluralité d'éléments de tapotage de glace (310) étant optionnellement installés en alignement les uns par rapport aux autres le long du premier axe de rotation (X1).

8. Appareil d'élimination de glace (100) selon la revendication 5, dans lequel l'au moins un composant de tapotage de glace (320, 820) comprend de multiples composants de tapotage de glace (320, 820) qui sont positionnés selon un angle les uns par rapport aux autres et fixés au moyeu de montage d'arbre (316), et chacun des multiples composants de tapotage de glace (320, 820) étant optionnellement une plaque de tapotage de glace (820) ayant une longueur s'étendant le long du moyeu de montage d'arbre (316) et une largeur s'étendant transversalement au premier axe de rotation (X1).

9. Appareil d'élimination de glace (100) selon l'une quelconque des revendications 2 à 8, dans lequel l'ensemble d'élimination de glace (400) comprend une pluralité d'éléments d'élimination de glace (410) mobiles en translation le long d'une direction d'élimination (R) sensiblement perpendiculaire à la direction de déplacement (D) lors de l'utilisation, et au moins un de la pluralité d'éléments d'élimination de glace (410) étant au moins partiellement constitué d'un matériau élastique.

10. Appareil d'élimination de glace (100) selon l'une quelconque des revendications 1 à 9, comprenant en outre au moins un élément parmi un déflecteur de glace (130) entourant au moins partiellement l'ensemble de tapotage de glace (300, 800) et configuré pour diriger la glace séparée vers l'ensemble d'élimination de glace (400), et une plaque de collecte de glace (140) à l'arrière de l'ensemble d'élimination de glace (400), la plaque de collecte de glace (140) comprenant une surface de contact avec le toit.

11. Système d'élimination de glace (500) comprenant :
un appareil d'élimination de glace (100) selon l'une quelconque des revendications 1 à 10 ; et
une structure de support (600), l'appareil d'élimination de glace (100) étant relié de manière opérationnelle à la structure de support (600) de manière à positionner l'appareil d'élimination de glace (100) à une hauteur au-dessus du niveau du sol et à assurer le contact d'au moins une partie de l'ensemble de tapotage de glace (300, 800) avec la glace du toit de véhicule lors de l'utilisation.

12. Système d'élimination de glace (500) selon la revendication 11, dans lequel la structure de support comprend deux ensembles de support verticaux (610, 620) séparés par une distance suffisante pour déplacer un véhicule entre ceux-ci.

13. Système d'élimination de glace (500) selon la revendication 11 ou 12, comprenant en outre un ensemble de levage d'appareil (640) pour configurer l'appareil d'élimination de glace (100) dans au moins deux positions verticales.

14. Procédé pour éliminer la glace se trouvant sur un toit d'un véhicule, le procédé comprenant : l'agencement du véhicule dans un espace de réception de véhicule au moins partiellement délimité par une structure de support (600) ; le positionnement d'un appareil d'élimination de glace (100) monté sur la structure de support à proximité d'une surface supérieure du toit de véhicule ; et l'actionnement d'un ensemble de tapotage de glace (300, 800) de l'appareil d'élimination de glace (100) s'étendant sensiblement transversalement à une longueur de toit, **caractérisé en ce que** l'ensemble de tapotage de glace (300, 800) est configuré pour exercer une pression vers le bas sur la glace sur le toit de véhicule par tapotage et pour séparer la glace du toit de véhicule lors du tapotage de l'ensemble de tapotage de glace (300, 800) sur le toit de véhicule, l'ensemble de tapotage de glace (300, 800) étant au moins partiellement constitué d'un matériau élastique.

15. Procédé selon la revendication 14, comprenant en outre l'actionnement d'un ensemble d'élimination de glace (400) de l'appareil d'élimination de glace, l'ensemble d'élimination de glace (400) déplaçant la glace séparée à l'écart du toit de véhicule.
